# EUROPEAN PATENT APPLICATION

(11) **EP 0 543 440 A1**
(43) Date of publication of application: **26.05.1993**
(21) Application number: 92203422.8
(22) Date of filing: 06.11.1992
(51) Int. Cl.: G01G 19/12, G01G 19/18, G01G 21/06

(54) **Device for weighing containers**

(30) Priority: 19.11.1991 NL 9101927
(71) Applicant: MOLEN B.V., NL-4817 MA Breda (NL)
(72) Inventor: Van Schaik, Frans, NL-5102 VB Dongen (NL)
(74) Representative: Eveleens Maarse, Pieter

(57) **Abstract**

The invention relates to a device for weighing a load suspended by means of a lifting device arranged on a vehicle, comprising: a frame suspended from the lifting device for rotation about a horizontal shaft; a weight transducer fixed to the frame; and a carrier fixed to the weight transducer and provided with means for fixing the load, wherein the carrier is fixed to the shaft by means of spherical bearings. The weighing device will thus always orient itself in accordance with forces to be absorbed, for instance during loading of a load placed at an angle behind the vehicle. Damage is hereby prevented and a precise measurement result is obtained during weighing.

In preference the spherical bearing is received in a block which is fastened in the frame for pivoting on a second shaft extending perpendicularly of the first horizontal shaft.

## Description

The invention relates to a device for weighing a load suspended by means of a lifting device arranged on a vehicle, comprising: a frame suspended from the lifting device for rotation about a horizontal shaft; a weight transducer fixed to the frame; and a carrier attached to the weight transducer and provided with means for fixing the load.

Such a system is known inter alia from the brochure "Container Weighing System CWI".

Such devices are mainly used for picking up loads standing behind the vehicle, which loads are fastened to the weighing device by means of chains and subsequently moved onto the vehicle by means of a lifting device arranged on the vehicle. In the movement of the load between the position adjacent to or usually behind the vehicle and the position on the vehicle the weighing device must transfer the weight of the load as well as the forces produced by the acceleration of the load. The weighing device must thus be suitable for transferring great forces.

In addition it frequently occurs that the load is not placed directly behind the vehicle so that the weighing device must absorb forces in an angular direction. It is otherwise also possible in other situations that the loads are placed such that a moment is exerted on the weighing device.

With the device belonging to the prior art the danger arises that the weighing device does not adjust itself to the force to be absorbed so that the weighing device must absorb moments and is damaged as a result.

During the actual weighing the problem occurs that, when the vehicle does not stand wholly horizontally, the lines of force, which are of course always vertical, are not parallel to the direction of the force transducer. As a result a measurement error occurs.

The object of the present invention is to provide such a weighing device, wherein the above stated drawback is avoided.

This object is achieved in that the carrier is fixed to the shaft by means of spherical bearings.

As a result of this step it is possible that the device wholly adjusts itself along the path of forces so that the weighing device is not required to absorb any moments and collapse of the device is prevented. Moreover, the occurrence of measurement errors is prevented. With the device according to the invention is achieved that, even when the vehicle stands at a 10° incline, a measurement result is obtained that is sufficiently accurate to permit calibration with financial transactions on the basis of this measurement result.

According to a preferred embodiment the spherical bearing is received in a block which is fastened in the frame for pivoting on a second shaft extending perpendicularly of the first horizontal shaft.

In accordance with this step a second pivot point is introduced, the axis of which is located at some distance below the centre of the spherical bearing. As a result of this step the danger of a moment being exerted on the weighing device is further reduced.

Such a weighing device is mainly used in picking up and weighing containers, for instance waste containers. This is quite a rough environment, wherein operations take place in the open air and in an environment where much dirt and dust occur. There is moreover great danger of mechanical damage.

In order to prevent the weighing device, and in particular the cables extending to this weighing device, from being damaged, a pipe is arranged in the frame for at least partially guiding a cable connected to the force transducer.

The cables of both force transducers are then connected to a recording means which is fixedly incorporated in the vehicle and with which the measurement signal coming from the force transducer is fed to the recording device and there recorded. On the basis of this recording a weighing ticket can be generated and/or the data resulting from the weighing can be stored.

The present invention will subsequently be elucidated with reference to the annexed figures, wherein:
fig. 1 shows a schematic perspective view of a goods vehicle provided with a weighing device according to the invention; and
fig. 2 is a partly broken away schematic perspective view of a device according to the invention.

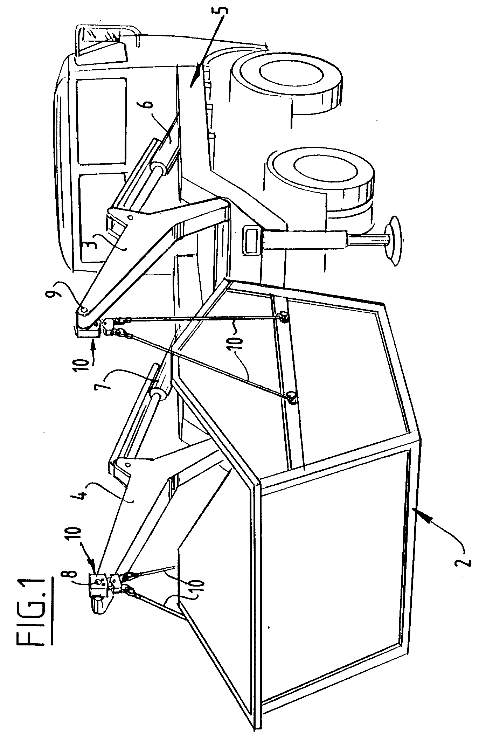

Shown in fig. 1 is a goods vehicle 1 suitable for transporting containers 2. Arranged on the chassis of the goods vehicle 1 are two lifting arms 3, 4 which are fixed to the chassis 5 of goods vehicle 1 for rotation on a horizontal axis. The lifting arms 3, 4 can be telescopically slidable to bring about a greater reach of the lifting devices. Hydraulic cylinders 6, 7 are arranged to effect tilting of the lifting arms 3, 4. To the end of each lifting arm 3, 4 is fixed an inward extending shaft 8, 9. A weighing device according to the present invention is arranged on each of these shafts. Fastened to this weighing device are chains 10 on which the container 2 is suspended. When such a container is collected it is often important to establish the weight thereof in respect of payment. This is for instance the case with waste containers, wherein a payment is asked by the collector which is dependent among other things on the weight of the collected quantity of waste.

It is however also possible for the device to be used in other forms of transportation, for instance the transporting of liquids and the like.

The lifting arms 3, 4 are first moved upward from the position shown by means of the hydraulic cylinders 6 respectively 7, whereby the container is carried up therewith. When the container is wholly freely suspended the signal generated by the weighing devices 10 can be read and a measurement ticket printed, or the value of the measurement signal can be stored in a recording device. The container is then moved further until it rests on the appropriate load surface of chassis 5 of the goods vehicle.

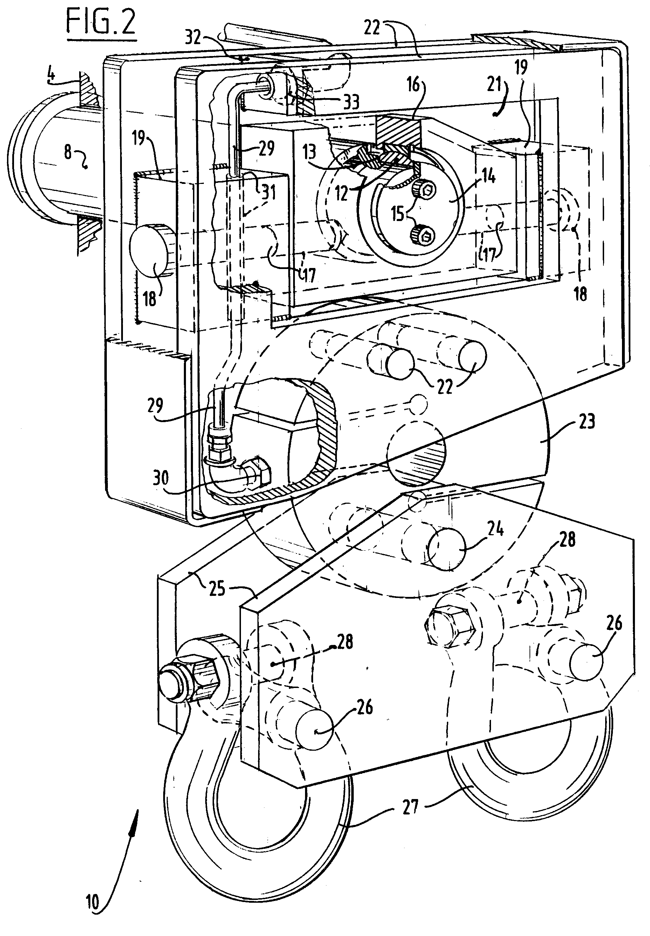

The weighing device 10 is further depicted in fig. 2. The weighing device 10 is fastened to a horizontally extending shaft 8 which is fixed to the lifting arm 4. A similar weighing device 10 is of course also arranged on the other side of the truck which is fastened to the shaft 9. A spherical bearing 12 is arranged on the end of shaft 8, wherein the spherical bearing is fixed by means of a shoulder 13 arranged on the shaft and a closing plate 14 which is arranged on the shaft and fixed to the end of the shaft by means of socket screws 15. Fixed around the spherical bearing is a block 16 which, due to the action of the spherical bearing, is attached rotatably about all three axes relative to the shaft 8.

Two holes 17 are bored in the side faces in the block 16, slightly below the centre of the spherical bearing.

Arranged in each of the holes are pins 18 which each likewise extend through a steel block 19. A hole is arranged in each of the steel blocks 19 for this purpose.

A plate 20 is arranged on either side of the steel blocks 19 so that the blocks 19 are mutually connected. The fixing of plates 20 onto blocks 19 takes place for instance by means of welding. In each of the plates 20 a window 21 is arranged at the location of the block 16. Thus a frame construction is created.

On the underside of this frame construction two pins 21 are arranged through the plates 20. These pins 22 also extend through a force transducer 23 having a substantially circular cross section.

This results in a firm connection between the force transducing element 23 and the frame formed by the plates 20.

The force transducer 23 is provided on its underside with a hole through which extends a pin 24. A plate 25 is arranged on both ends of the pin, which two plates 25 are otherwise connected by two thickened pins 26.

The pins 24, 26 can otherwise be connected to the plates 25 by for instance welding.

Arranged round both thickened pins 26 are two harp-shaped links 27 which are closed by a bolt connection 28.

Hooks fastened to chains can be attached to these links 27 for the purpose of lifting the loads in the form of containers.

The provision of the ball joint 12 in combination with the rotation possibility of the blocks 19 relative to the bolts 18 results in a degree of freedom such that the line of connection between the centre of the spherical bearing and the point of engagement of the resultant forces engaging on the links 27 is always parallel to the central line of the whole above mentioned construction. Thus is prevented that moments act on this construction so that damage to the construction is prevented.

Further due to the above stated steps the line of force is also parallel to the direction in which the force transducer performs its measurements. The required accuracy of the measuring device is thus achieved.

A signal cable 29 is otherwise arranged for feeding a measurement signal to the recording device usually arranged in the cab of the truck. According to the invention the signal cable 29, which is connected to the measurement transducer 23 by means of a coupling nut 30, is guided via a bore 31 extending through block 19. The signal cable 29 is further guided through a coupling nut 33 arranged in a reinforcing wall 32. The cable extends therein through a slot arranged in a plate 20 and further along the lifting arm 4 shown in fig. 2 to the chassis 5 in the cab of the truck. The cable 29 is thus guided in the most protected manner possible.

## Claims

1. Device for weighing a load suspended by means of a lifting device arranged on a vehicle, comprising:
- a frame suspended from the lifting device for rotation about a horizontal shaft;
- a weight transducer fastened to the frame; and
- a carrier fixed to the weight transducer and provided with means for fastening the load,
**characterized in that** the carrier is fixed to the shaft by means of spherical bearings.

2. Device as claimed in claim 1, **characterized in that** the spherical bearing is received in a block which is fastened in the frame for pivoting on a second shaft extending perpendicularly of the first horizontal shaft.

3. Device as claimed in claim 1 or 2, **characterized in that** a pipe is arranged in the frame for at least partially guiding a cable connected to the force transducer.

4. Device as claimed in claim 1, 2 or 3, **characterized in that** the force transducer is rigidly connected to the frame and connected rotatably to the carrier.

5. Device as claimed in any of the foregoing claims, **characterized in that** the frame is formed by two parallel plates which are arranged at a mutual distance and which are mutually joined at the position of the force transducer by at least one pin extending through the force transducer and by one block at their sides.

6. Device as claimed in any of the foregoing claims, **characterized in that** the carrier is formed by two parallel plates which are arranged at a mutual distance and which are joined at the position of the force transducer by at least one pin extending through the force transducer and which are mutually joined by at least by a second pin.

7. Truck adapted for transporting containers, provided with a lifting device tiltable about a horizontal axis, **characterized in that** a weighing device as claimed in any of the foregoing claims is arranged on both sides of the lifting device.
